(19) Europäisches Patentamt
European Patent Office
Office européen des brevets

(11) **EP 2 346 912 B1**

(12) **EUROPEAN PATENT SPECIFICATION**

(45) Date of publication and mention
of the grant of the patent:
**12.09.2012 Bulletin 2012/37**

(51) Int Cl.:
**C08F 210/16** *(2006.01)* **C08F 4/6592** *(2006.01)*

(21) Application number: **09748329.1**

(86) International application number:
**PCT/EP2009/064673**

(22) Date of filing: **05.11.2009**

(87) International publication number:
**WO 2010/052266 (14.05.2010 Gazette 2010/19)**

(54) **PROCESS FOR THE PREPARATION OF POLYETHYLENE**

VERFAHREN ZUR HERSTELLUNG VON POLYETHYLEN

PROCÉDÉ POUR LA PRÉPARATION DE POLYÉTHYLÈNE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 EP 08168624**

(43) Date of publication of application:
**27.07.2011 Bulletin 2011/30**

(73) Proprietor: **Borealis AG**
**1220 Vienna (AT)**

(72) Inventors:
• **SEVERN, John**
**FI-00810 Helsinki (FI)**
• **PAKKANEN, Anneli**
**FI-01120 Västerskog (FI)**
• **MUSTONEN, Marja**
**FI-07700 Koskenkylän Saha (FI)**
• **KOKKO, Esa**
**FI-01520 Vantaa (FI)**
• **TURPEINEN, Tarja-Tuulikki**
**FI-06650 Hamari (FI)**
• **AUMO, Jeanette**
**FI-06400 Porvoo (FI)**
• **REKONEN, Petri**
**FI-06100 Porvoo (FI)**
• **VAHTERI, Markku**
**FI-06100 Porvoo (FI)**
• **MAARANEN, Janne**
**FI-04260 Kerava (FI)**
• **KRAJETE, Alexander**
**A-4020 Linz (AT)**
• **DRENG, Tore**
**N-3261 Lannvik (NO)**
• **DIX, Albrecht**
**A-4040 Linz (AT)**

(74) Representative: **Maiwald Patentanwalts GmbH**
**Elisenhof**
**Elisenstrasse 3**
**80335 München (DE)**

(56) References cited:
**EP-A- 0 327 649      EP-A- 1 693 388**
**EP-A- 1 882 703      WO-A-03/051934**
**US-A- 5 165 998      US-A- 5 455 316**

**Description**

The present invention is directed to a new process for the preparation of polyethylene.

It is well known that a huge variety of different polyethylene types is achieved by specific tailored processes. Such different processes have typically different variables and parameters, including different monomer(s), solvents, additives, reaction conditions, catalyst systems, and the like. The properties and characteristics of the final products are quite often dependent on the components used in the process and on the parameters of the process that are selected, and it has been recognized that small modifications in such variables and parameters can create significant differences in not only the final product, e.g. polymer properties, but also in the effectiveness and operability of the overall process.

The bulk density of the polymer is a crucial process parameter, which influences settling efficiency and process economy. Higher bulk density gives higher through put of the process. Normally, an increase of polymer particle size reduces the bulk density. Further, in homogeneous quality point of view, it is desired that the particle size distribution is as narrow as possible. From a production point of view, it is however desirable to have big particles with high bulk density, two requirements which act in a conflicting manner as is commonly known.

For instance in polymerisation processes of ethylene slurry reactors are frequently used either alone or in combination with additional reactors, like other slurry reactors or gas phase reactors. Reaction medium is normally a saturated light hydrocarbon. Heterogeneous catalyst systems are commonly used in such processes to avoid the drawbacks of the homogeneous processes, like reactor fouling caused by the obtained polymers with low bulk density (fluffy material).

Conventional heterogeneous catalysts are solid catalyst systems, where catalyst components are supported or loaded onto catalytically inert carrier material, such as organic and inorganic support materials, like silica, $MgCl_2$ or porous polymeric material. Silica is the mostly used as carrier material with single site, e.g. metallocene type catalysts. However, there are problems which result from the use of supported catalyst systems. For instance, it is difficult to get an even distribution of the catalyst components in the porous carrier material; and leaching of the catalyst components from the support can occur. Such drawbacks lead to unsatisfactory polymerisation behaviour of the catalyst, and, as a result, the morphology of the polymer product thus obtained is also poor. In other words it is not possible to produce polyethylene of narrow particle size distribution and high particle size and high bulk density. Furthermore, such classic heterogeneous catalyst systems show reduced catalyst activity which is of course detrimental as the catalyst amount must be increased which in turn leads to polyethylene products contaminated with rather high amounts of catalyst residues, which can be extremely detrimental in some product areas within the field of the present invention.

To avoid the contamination of the polyethylene products with catalytic residues new catalyst systems have been developed being self-supported, i.e. being not in need of catalytically inert, external support material, and being further featured by a low porosity and low surface area. Such new catalyst systems enable in principle to increase the output rate of polyolefin, like polyethylene or polypropylene processes since the bulk density of the polymerized product can be increased. For the first time such new metallocene catalyst systems have been for instance described in WO 03/051934. However these new self-supported catalyst systems have the drawback that they tend to dissolve to some extent in the polymerisation medium needed in the slurry reactors and thus the outstanding morphology of the self-supported catalyst systems is reduced. Further it must be considered that the self-supported catalyst systems generate - due to the high amount of catalytically active species in the catalyst system - at the beginning of the polymerization high temperatures what causes a melting of the produced material. Both effects, i.e. the partial dissolving of the catalyst system and the heat generation, cause fouling and sheeting in the reactors. These problems during the polymerization process make it to date impossible to produce big polyethylene particles with a high bulk density and narrow particle size distribution.

EP 0 327 649 A1 refers to a catalyst for olefin polymerization and a process for its production.

Comparative example 1 discloses the prepolymerisation of a solid metallocene catalyst system having a surface area of 4,3 $m^2$/g at 20°C.

The range of prepolymerisation temperature disclosed in this document is 20-70°C.

EP 1 693 388 A1 discloses a process for the polymerization of ethylene or the copolymerization of ethylene and alpha-olefins in the presence of a catalyst system which comprises a prepolymer prepared by prepolymerising a supported metallocene with ethylene at a temperature in the range 60°C to 100°C.

The support used in the examples is a silica having a surface area above 25$m^2$/g.

Thus the object of the present invention is to provide a new process for the preparation of polyethylene with big polyethylene particles and with a high bulk density. In addition present invention allows preferably production of polyethylene with narrow particle size distribution. Especially the object of the present invention is to provide a new process for preparing polyethylene with a density below 940 kg/$m^3$. Thus, the specific object of the present invention is to provide a process for producing polyethylene having big mean particle size, high bulk density and density below 940 kg/$m^3$. Polyethylenes having density area below 940 kg/$m^3$ cover LD and most MD ethylene polymers.

The finding of the present invention is that the applied process for the preparation of polyethylene must comprise a prepolymerization step with specifically selected operating window which enables to efficiently prepolymerize a catalyst system of low porosity and low surface area. A further finding of the present invention is that the prepolymerization must be run at rather high temperature.

Accordingly the present invention is directed to a process for the preparation of a polyethylene, preferably of a polyethylene having density below 940 kg/m$^3$, comprising the steps of

(a) prepolymerizing a solid metallocene catalyst system (MCS) in the presence of ethylene and/or (a) C3 to C 10 α-olefin(s) at a temperature above 75 °C, and
(b) subsequently polymerizing in the presence of the prepolymerized solid metallocene catalyst system (pre-MCS) ethylene and optionally C3 to C10 α-olefin(s) obtaining a polyethylene,

wherein the solid metallocene catalyst system (MCS) used in step (a)

(i) has surface area measured according to ASTM D 3663 of less than 25.0 m$^2$/g and/or a porosity measured according to ASTM 4641 of less than 1.40 ml/g,
and
(ii) comprises

(α) an organo-transition metal compound of formula (I)

$$L_2R_nMX_2 \qquad (I)$$

wherein
M is a transition metal of groups 4 to 10 of the periodic table (IUPAC)
L is an organic η$^5$-ligand,
R is a bridging group linking the organic ligands (L),
X is a ligand with a σ-bond to the transition metal (M)
n is 0, 1 or 2,
and
(β) a cocatalyst (Co) comprising an element of group 13 of the periodic table (IUPAC).

It is preferred that the prepolymerization step (a) is conducted in a slurry prepolymerizing reactor, preferably loop prepolymerizing reactor, and/or
the polymerization step (b) is conducted in a reactor system comprising at least one slurry rector, preferably at least one loop reactor, and/or at least one gas phase rector.

More specifically the present invention is directed to a process for the preparation of a polyethylene, preferably of a polyethylene having density below 940 kg/m$^3$, comprising the steps of

(a) prepolymerizing in a slurry prepolymerizing reactor a solid metallocene catalyst system (MCS) in the presence of ethylene and/or (a) C3 to C10 α-olefin(s) at a temperature above 75 °C,
(a1) transferring the prepolymerized solid metallocene catalyst system (pre-MCS) from the slurry prepolymerizing reactor to a slurry reactor of a reactor system comprising at least one slurry reactor, preferably at least one loop reactor, and at least one additional reactor selected from slurry and gas phase rectors,
(b) subsequently starting polymerization of ethylene and optionally C3 to C10 α-olefin(s) in said slurry reactor, preferably loop reactor, in the presence of the prepolymerized solid metallocene catalyst system (pre-MCS),
(c) continuing polymerization of step (b) in at least one additional slurry reactor, preferably loop reactor, and/or at least one gas phase reactor obtaining a polyethylene, and
(d) recovering the polyethylene,
wherein the solid metallocene catalyst system (MCS) used in step (a)

(i) has surface area measured according to ASTM D 3663 of less than 25.0 m$^2$/g and/or a porosity measured according to ASTM 4641 of less than 1.40 ml/g,
and
(ii) comprises

(α) an organo-transition metal compound of formula (I)

$$L_2R_nMX_2 \qquad (I)$$

wherein

M is a transition metal of groups 4 to 10 of the periodic table (IUPAC)

L is an organic $\eta^5$-ligand,

R is a bridging group linking the organic ligands (L),

X is a ligand with a $\sigma$-bond to the transition metal (M)

n is 0, 1 or 2,

and

($\beta$) a cocatalyst (Co) comprising an element of group 13 of the periodic table (IUPAC).

In a preferred embodiment the polymerization steps (b and c) are carried out in a polymerization reactor system comprising at least one loop reactor and at least one gas phase reactor.

The density of the polyethylene produced according to the present invention is, as said, preferably below 940 $kg/m^3$. Some embodiments the polyethylene has a density below 930 $kg/m^3$, or even below 920 $kg/m^3$.

It has been surprisingly found out that with the new process the solid metallocene catalyst system (MCS) does not dissolve during the polymerization of ethylene and optionally C3 to C10 $\alpha$-olefin(s). Further with the new process big polyethylene particles are obtainable with high bulk density. Additionally the polyethylene particles have a narrow particle size distribution and rather low ash content.

As stated above one essential finding of the present invention is that the solid metallocene catalyst system (MCS) must be prepolymerized at rather high temperatures. Accordingly the temperature in the prepolymerizing step (a) is at least 75 °C, more preferably at least 78 °C, yet more preferably at least 80 °C. On the other hand the polymerization temperature in step (a) should be not too high to avoid a melting of the produced polymeric material. Accordingly it is appreciated that the polymerization temperature in step (a) is in the range of 75 to 100 °C, more preferably in the range of 78 to 85 °C.

The reaction pressure in the prepolymerization step (a) is preferably from 45 to 100 bar, more preferably from 50 to 90 bar, yet more preferably from 55 to 70 bar.

The hydrogen feed during the prepolymerization step (a) can be chosen depending on the desired properties to be achieved of the final polyethylene. However in particular good results are obtainable in case the hydrogen feed is rather high. Thus it is appreciated that the hydrogen/ethylene feed ratio (g hydrogen/kg ethylene) during the prepolymerization of the solid metallocene catalyst system (MCS) (step (a)) is at least 0.3 g $H_2$/kg $C_2$, more preferably at least 0.5 g $H_2$/kg $C_2$.

Of course the hydrogen feed should be not too high otherwise the tailoring of the polyethylene material during the subsequent polymerization is difficult to accomplish. Therefore it is preferred that the hydrogen feed during the prepolymerization step (a) is in the range of 0.3 to 2.0 g $H_2$/kg $C_2$, more preferably in the range of 0.5 to 1.5 g $H_2$/kg $C_2$, and still more preferably 0.5 to 1.0 g $H_2$/kg $C_2$.

In the prepolymerization step (a) the polymerizable monomer can be ethylene and/or C3 to C10 $\alpha$-olefin(s), preferably C4 to C8 $\alpha$-olefin(s), especially butene, hexene, and/or octene, still more preferably butene and/or hexene. Accordingly the main monomer is preferably ethylene whereas the other $\alpha$-olefin(s) can be fed additionally.

It has been in particular found out that the presence of small amounts of C4 to C10 $\alpha$-olefin(s), especially 1-butene, iso-butene, hexene or octene, in the prepolymerization step (a) improves the prepolymerization of the solid metallocene catalyst system (MCS). Accordingly the $\alpha$-olefin/ethylene feed ratio (wt-ratio), preferably g $C_4$/kg $C_2$ feed ratio, during the prepolymerization step (a) is preferably in the range of 5 to 40 g $C_4$/kg $C_2$, more preferably 5 to 30 g $C_4$/kg $C_2$, yet more preferably in the range of 7 to 20 g $C_4$/kg $C_2$.

The prepolymerization step (a) has the advantage that the solid metallocene catalyst system (MCS) is protected against the polymerization medium in the slurry reactor, like loop reactor, used in the subsequent steps. Thereby the produced polymer material acts as a protection medium for the solid metallocene catalyst system (MCS). Thus the solid metallocene catalyst system (MCS), i.e. the catalytic active species within the polymerized material, is protected against dissolution phenomena in a slurry reactor, i.e. in low molar mass hydrocarbons, like propane, i-butane, pentane, hexane. On the other hand the protection of the solid metallocene catalyst system (MCS) should be not too massive otherwise the catalytic activity of the active species might be deteriorated. In the present invention the conflicting interests on the one hand of high production rate of the solid metallocene catalyst system (MCS) and on the other hand of the stability of the solid metallocene catalyst system (MCS) in the polymerization medium of the slurry reactor is achieved by protecting the catalyst system due to the polymer material produced in the prepolymerization step (a).

Further it is notable that the operability of the polymerisation process, even a multistage process, is on a good level by using the process of the invention for producing polyethylene having density below 940 $kg/m^3$.

The amount of polymer produced in the prepolymerisation step is only a few wt.-% of the total amount of polymer produced in the whole process, i.e. it is at most 10 wt.-%, preferably less than 7 wt.-%, or even less than 5 wt.-%.

It has been additionally discovered that fouling in the prepolymerization step (a) can be further reduced in case an antifouling composition is used. Thus it is appreciated that the antifouling composition feed during the prepolymerization step (a) is at least 10 ppm more preferably at least 20 ppm. In a specific embodiment the antifouling composition feed during the prepolymerization step (a) is in the range of 30 to 100 ppm, more preferably in the range of 30 to 80 ppm. One type of preferred antifouling composition is defined in more detail below.

The prepolymerization step (a) is preferably conducted in a slurry prepolymerizing reactor, more preferably in a loop prepolymerizing reactor.

After having prepolymerized the solid metallocene catalyst system (MCS), it is directly transferred to a reactor system comprising at least one slurry rector, preferably at least one loop reactor, and optionally at least one additional reactor selected from slurry, preferably loop, reactor and gas phase rector. Temperature conditions in the reactor system for producing the polyethylene is in the range of 40 to 130°C, more preferably in the range of 65 to 115 °C.

Accordingly in the present preferred process - in addition to the slurry prepolymerizing reactor - at least one further reactor is used for the preparation of the polyethylene. It is in particular preferred that the reactor system comprises at least one slurry reactor, more preferably one loop reactor. However it is in particular appreciated that the preparation of the polyethylene (after having the solid metallocene catalyst system (MCS) prepolymerized) is conducted in a multistage polymerization, i.e. the polyethylene is first polymerized in the slurry reactor and subsequently in at least one further slurry reactor and/or at least one gas phase reactor. Even more preferably the polyethylene is produced first in a slurry reactor, i.e. loop reactor, and subsequently in at least one gas phase reactor, preferably in one or two gas phase reactors.

A preferred multistage process is a "loop-gas phase"-process, such as developed by Borealis (known as BORSTAR® technology) described e.g. in patent literature, such as in EP 0887 379 or EP 517 868.

If the polyethylene composition is multimodal at least with respect to the molecular weight distribution (MWD), then the lower molecular weight (LMW) component and the higher molecular weight (HMW) component are made in different steps. The LMW fraction is preferably produced first and the HMW fraction is produced in a subsequent step in the presence of the component as obtained from the first reactor.

The process of the invention is preferably a continuous process.

As stated above, the temperature conditions in the reactor system for producing the polyethylene is in the in the range of 40 to 130°C, more preferably in the range of 65 to 115 °C.

Therefore the conditions for the slurry reactor, preferably loop reactor, of step (b) may be as follows:

- a diluent is used, which diluent can be for instance a fluid hydrocarbon reaction medium, like an aliphatic hydrocarbon in a manner known in the art,
- the temperature is within the range of 40 to 110°C, preferably between 60 and 100°C or 70 to 90 °C,
- the pressure is within the range of 20 to 80 bar, preferably between 30 to 70 bar,
- hydrogen can be added for controlling the molar mass in a manner known per se
- the residence time is typically 0.5 to 5 hours

It is sometimes advantageous to conduct the slurry polymerization above the critical temperature and pressure of the fluid mixture. Such operation is described in US-A-5391654. In such operation the temperature is typically from 85 to 110 °C and the pressure is from 40 to 150 bar, preferably from 50 to 100 bar.

Preferably, the fluid hydrocarbon reaction medium comprises a $C_3$ to $C_6$ hydrocarbon. More preferably, the $C_3$ to $C_6$ hydrocarbon is selected from propane, i-butane, pentane, hexane, or any mixture thereof.

As can be deducted from the tables in the example section the inventive process enables to produce polyethylene material in the slurry reactor, preferably loop reactor, which is featured by high bulk density and rather big particle size, and also narrow mean particle size distribution. All properties are appreciated as therewith the production rate during the manufacture of polyethylene can be significantly increased.

In gas phase reactor the conditions are preferably as follows:

- the temperature is within the range of 50 to 130°C, preferably between 60 and 115°C,
- the pressure is within the range of 10 to 60 bar, preferably between 10 to 40 bar,
- hydrogen can be added for controlling the molar mass in a manner known per se,
- the residence time is typically 1 to 8 hours.

The gas phase polymerisation may be conducted in a manner known in the art, such as in a fluidised bed or in an agitated bed. Also fast fluidisation may be utilised.

The amount of ethylene and optionally comonomers C3 to C10 α-olefin(s) fed during the total process depend very much on the desired end product. The same applies for hydrogen feed, temperature and pressure used in the polymerization steps (b) to (c) as long as the above predefined ranges are considered. This exact amount and ratios needed for the polymerization of the respective polyethylene can be easily determined by a person skilled in the art. Accordingly the inventive process enables a person skilled in the art to produce polyethylene of different types based on the general concept as disclosed in the instant invention. Thus with the new process a broad range of different polyethylene types can be accomplished. The preferred polyethylene materials which can be produced with the new process is the one as defined in further detail below.

Scavengers can be also used in the polymerization steps (b) to (c). As catalyst scavengers Al compounds, like Al alkyl compounds, e.g. triethyl aluminium, and tri-i-butyl aluminium are commonly used.

An antifouling composition can be added in addition to the prepolymerization step (a) also in the actual polymerization of the polyethylene (steps (b) to (c)). The antifouling composition according to this invention comprises an organic compound which has at least 14 carbon atoms and comprises at least one polar functional group.

Preferably, the polar functional group is selected from the group consisting of hydroxyl including phenolic groups, carboxylic acid, ketone, aldehyde, ester, ether, thioether, amine, epoxy, thiol, or any combination thereof.

Preferably, the organic compound comprises a hydrocarbyl group having at least 5 carbon atoms. In a preferred embodiment, the hydrocarbyl group having at least 5 carbon atoms is selected from linear or branched $C_{10}$ to $C_{22}$ hydrocarbyl groups, which may optionally include one or more carbon-carbon double bonds.

In a preferred embodiment, the organic compound may comprise at least one substituted or unsubstituted cyclic moiety having at least 5 ring atoms. Preferably, said cyclic moiety is a tetrahydrofuranyl ring having at least one, preferably two hydroxyl groups attached to the ring.

Preferably, the organic compound is selected from sterically hindered phenols, ethoxylated amines, ethoxylated amides, sorbitan ester compounds, thioether compounds, or mixtures thereof.

Preferably, the sorbitan ester is a sorbitan $C_8$ to $C_{20}$ fatty acid ester. More preferably, the sorbitan fatty acid ester is selected from sorbitan stearate, sorbitan monooleate, or mixtures thereof.

As stated above one mandatory requirement according to the present invention is that the solid metallocene catalyst system (MCS) is prepolymerized. The solid metallocene catalyst system (MCS) must comprise an organo-transition metal compound of formula (I) and a cocatalyst (Co) comprising an element of group 13 of the periodic table (IUPAC).

Accordingly the solid metallocene catalysts system (MCS) used in the prepolymerization step (a) must firstly comprise an organo-transition metal compound of formula (I) as defined above. Thereby the transition metal (M) can be any transition metal of groups 4 to 10 of the periodic table (IUPAC), preferably of groups 4 to 6 of the periodic table (IUPAC). However it is preferred that the transition metal (M) is selected from the group consisting of titanium (Ti), zirconium (Zr) and hafnium (Hf). It is in particular appreciated that the transition metal is hafnium (Hf) or zirconium (Zr).

Further it is required that the two organic ligands (L) are able to form a $\eta^5$-bond to the transition metal (M). For instance substituted or unsubstituted cycloalkyldiene ligands have the ability to form $\eta^5$-bonds to the transition metal (M). In particular suitable organic $\eta^5$-ligands (L) are cylopentadienyl and its derivatives. Accordingly it is preferred that the two organic $\eta^5$-ligands (L) are independently selected from the group consisting of unsubstituted cyclopentadienyl ligand, substituted cyclopentadienyl ligand, unsubstituted indenyl ligand, substituted indenyl ligand, unsubstituted fluorenyl ligand and substituted fluorenyl ligand. Even more preferred the two organic $\eta^5$-ligands (L) are independently selected from the group consisting of unsubstituted cyclopentadienyl ligand, substituted cyclopentadienyl ligand, unsubstituted indenyl ligand and substituted indenyl ligand.

As stated above the cyclopentadienyl ligand, the indenyl ligand or the fluorenyl ligand may be substituted, i.e. comprises residues. Accordingly the substituted cyclopentadienyl ligand, the substituted indenyl ligand or the substituted fluorenyl ligand may comprise (a) residue(s) selected from the group consisting of halogen, C1 to C10 alkyl, C2 to C20 alkenyl, C2 to C20 alkinyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C1 to C20 haloalkyl. In particular preferred residues for the substituted cyclopentadienyl ligand, the substituted indenyl ligand or the substituted fluorenyl ligand are

   (a) C1 to C5 alkyl, like methyl, ethyl, iso-propyl and n-butyl, in particular methyl and n-butyl, wherein the alkyl residue may form a ring with the ligand, and
   (b) C6 to C 10 aryl, like phenyl.

Particular suitable organic $\eta^5$-ligands (L) are cyclopentadienyl, indenyl, C1 to C6 alkyl-cyclopentadienyl, like methyl-cyclopentadienyl, for instance 1,2,4-trimethylcyclopentadienyl, butyl-cyclopentadienyl, like n-butly-cyclopentadienyl, C6 to C10 aryl-indenyl, like 4-phenyl-indenyl, and tetrahydroindenyl.

As stated above the two organic $\eta^5$-ligands (L) can be different or identical, however it is preferred that the two organic $\eta^5$-ligands (L) are identical. Thus it is in particular appreciated that the two organic $\eta^5$-ligands (L) are identical and selected from the group consisting of C1 to C6 alkyl-cyclopentadienyl, like methyl-cyclopentadienyl, for instance 1,2,4-trimethylcyclopentadienyl, butyl-cyclopentadienyl, like n-butly-cyclopentadienyl, and tetrahydroindenyl.

Further, the two organic $\eta^5$-ligands (L) can be linked via one or two bridging group(s) (R). The bridging group(s) (R) may form a bridge of 1 to 7 atoms length, like 1 to 4 atoms length, preferably with at least one heteroatom Such heteroatom may be selected from the group consisting of silicon (Si), germanium (Ge) and oxygen (O). The atoms of the bridge may bear independently substituents, such as C1 to C20 alkyl, tri(C1 to C20 alkyl)silyl, tri(C1 to C20 alkyl) siloxy or C6 to C20 aryl.

More preferably the bridging group(s) (R) has(have) the formula (II)

$$-Y(R')_2- \qquad (II)$$

wherein
Y is C, Si or Ge, and
R' is C1 to C20 alkyl, C6-C12 aryl, C7-C12 arylalkyl or trimethylsilyl.

More preferably the organo-transition metal compound of formula (I) comprises only one bridging group (R) or no bridging group (R), i.e. n is 0 or 1, most preferably n is 0.

As a further requirement the organo-transition metal compound of formula (I) must comprise two ligands (X) σ-bonding to the transition metal (M). The lignads (X) are preferably independently selected from the group consisting of hydrogen, halogen, C1 to C20 alkyl, C1 to C20 alkoxy, C2 to C20 alkenyl, C2 to C20 alkinyl, C3 to C12 cycloalkyl, C6 to C20 aryl, C6 to C20 aryloxy, C7 to C20 arylalkyl, C7 to C20 arylalkenyl, -SR", -PR"$_3$, -SiR"$_3$, -OSiR"$_3$ and -NR"$_2$, wherein each R" is independently hydrogen, C1 to C20 alkyl, C2 to C20 alkenyl, C2 to C20 alkinyl, C3 to C12 cycloalkyl or C6 to C20 aryl.

For the present invention the two ligands (X) are particularly independently selected from the group consisting of halogen, C1 to C20 alkyl, C1 to C20 alkoxy, C2 to C20 alkenyl, C2 to C20 alkinyl. C6 to C10 aryl and C7 to C20 arylalkyl. Thus the two ligands (X) can be chlorine (C1), bromine (Br), methyl, iso-propyl, n-butly, phenyl and benzyl. In preferred embodiments the two ligands (X) are identical and either chlorine (Cl) or benzyl (Bz).

Particularly preferred are the following compounds:

bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,
bis(1,2,4-trimethylcyclopentadienyl)Zr dibenzyl,
bis(tetrahydroindenyl)Zr dibenzyl,
bis(n-butylcyclopentadienyl)Hf (CH$_2$SiMe$_3$)$_2$,
bis(n-propylcyclopentadienyl)Hf (CH$_2$SiMe$_3$)$_2$,
bis(i-propylcyclopentadienyl)Hf (CH$_2$SiMe$_3$)$_2$
bis(1,2,4-trimethylcyclopentadienyl)Zr(CH$_2$SiMe$_3$)$_2$,

Most preferred compounds are Hf dibenzyl compounds of the above list.

As a further requirement the metallocene catalyst system (MCS) must contain a cocatalyst, wherein preferably the cocatalyst (Co) comprises an element (E) of group 13 of the periodic table (IUPAC). Thus the cocatalyst comprises for instance aluminium (Al) and/or boron (B). In a preferred embodiment the cocatalyst (Co) comprises a compound of Al. Examples of such cocatalyst (Co) are organo aluminium compounds, such as trialkylaluminium compound and/or aluminoxane compound.

Aluminoxane cocatalysts are inter alia described in WO 94/28034 which is incorporated herein by reference. These are linear or cyclic oligomers of having up to 40, preferably 3 to 20, -(Al (R''')O)- repeating units (wherein R''' is hydrogen, C1 to C10-alkyl (preferably methyl) or C6 to C18-aryl or mixtures thereof).

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid metallocene catalyst system (MCS) only compounds of Al as cocatalyst (Co) are employed.

In particular preferred cocatalysts (Co) are the aluminoxanes, in particular the C1 to C 10-alkylaluminoxanes, most particularly methylaluminoxane (MAO).

Preferably, the transition metal compound of formula (I) and the cocatalyst (Co) of the solid metallocene catalyst system (MCS) represent at least 70 wt%, more preferably at least 80 wt%, even more preferably at least 90 wt%, even further preferably at least 95 wt% of the solid metallocene catalyst system (MCS). Thus it is appreciated that the solid metallocene catalyst system (MCS) is featured by the fact that it is self-supported, i.e. it does not comprise any catalytically inert support material, like for instance silica, alumina or MgCl$_2$ or porous polymeric material, which is otherwise commonly used in heterogeneous catalyst systems, i.e. the catalyst is not supported on external support or carrier material. As a consequence that the solid metallocene catalyst system (MCS) is self-supported it has a rather low surface area.

A low surface area is insofar appreciated as therewith the bulk density of the produced polyethylene can be increased enabling a high throughput of material. Typically the solid metallocene catalyst system (MCS) has a surface area measured according to the commonly known BET method with $N_2$ gas as analysis adsorptive of less than 25 $m^2/g$, more preferably of less than 20 $m^2/g$, yet more preferably of less than 15 $m^2/g$, still yet more preferably of less than 10 $m^2/g$. In some embodiments, the solid metallocene catalyst system (MCS) in accordance with the present invention shows a surface area of 5 $m^2/g$ or less.

The solid metallocene catalyst system (MCS) can be additionally or alternatively defined by the pore volume. Thus it is appreciated that the catalyst particle has a porosity of less than 1.40 ml/g, more preferably of less than 1.00 ml/g, still more preferably of less than 0.50 ml/g and even less than 0.20 ml/g. In another preferred embodiment the porosity is not detectable when determined with the method applied as defined in the example section.

Moreover the solid metallocene catalyst system (MCS) typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m. In some cases the mean particle size is in the range of 20 to 50 $\mu$m.

Based on the above made disclosure the solid metallocene catalyst system (MCS) comprises

(a) an organo-transition metal compound of formula (III)

$$L_2MX_2 \qquad (III)$$

wherein
M is hafnium (Hf) or zirconium (Zr), preferably hafnium (Hf),
L is selected from the group consisting of cyclopentdienyl, 1,2,4-trimethylcyclopentadienyl, n-butyl-cyclopentadienyl, 4-phenyl-indenyl and tetrahydroindenyl,
X is halogen, like chlorine (Cl), or C7 to C20 arylalkyl, like benzyl,
and
(b) a cocatalyst comprising aluminium (Al), preferably a cocatalyst being a trialkylaluminium compound and/or an aluminoxane compound, like C1 to C10 alkylaluminoxanes, for instance methylaluminoxane (MAO)

wherein the catalyst system has

(i) a surface area of less than 25.0 $m^2/g$, preferably less than less than 15 $m^2/g$, more preferably of less than 10 $m^2/g$ measured according to ASTM D 3663, and/or
(ii) preferably a porosity of less than 1.00 ml/g, more preferably of less than 0.50 ml/g, like less than 0.20 ml/g., measured according ASTM 4641.

The solid metallocene catalyst system (MCS) is preferably obtained by the emulsion solidification technology as described in WO 03/051934. This document is herewith included in its entirety by reference.

Hence the solid metallocene catalyst system (MCS) is preferably obtainable by a process by converting a solution (A) comprising the transition metal compound of formula (I) and the cocatalyst (Co) to solid particles comprising the steps of

(a) generating a liquid/liquid emulsion by dispersing the solution (A) in a solvent (S) immiscible with said solution (A), wherein

(i) the solvent (S) constitutes the continuous phase of the emulsion and
(ii) the solution (A) constitutes in form of droplets the dispersed phase of the emulsion,
(iii) the transition metal compound of formula (I) and the cocatalyst (Co) are present in the droplets, and

(b) solidifying said dispersed phase to convert said droplets to solid particles.

More precisely the solid metallocene catalyst system (MCS) is preferably obtainable by a process comprising the steps of

(a) preparing a solution (A) of the components of the solid metallocene catalyst system (MCS), wherein
the solution (A) comprises at least a solvent (A'), the organo-transition metal compound of formula (I) and the cocatalyst (Co) as defined in the instant invention,
(b) dispersing said solution (A)

in a solvent (B) immiscible therewith and

optionally in the presence of a surfactant (S)

to form an emulsion in which said components are present in the droplets of the dispersed phase, and

(c) solidifying said dispersed phase to convert said droplets to solid particles and recovering said particles to obtain said solid metallocene catalyst system (MCS).

Preferably an organic solvent (A') is used to form said solution (A). Still more preferably the organic solvent (A') is selected from the group consisting of a linear alkane, cyclic alkane, linear alkene, cyclic alkene, aromatic hydrocarbon, like toluene, and halogen-containing hydrocarbon. Toluene is in particular preferred as a solvent (A') to form the solution (A) with the components of the metallocene catalyst system.

Moreover the immiscible solvent (B) forming the continuous phase is an inert solvent, more preferably the immiscible solvent (B) comprises a fluorinated organic solvent and/or a functionalized derivative thereof, still more preferably the immiscible solvent (B) comprises a semi-, highly- or perfluorinated hydrocarbon and/or a functionalized derivative thereof. It is in particular preferred, that said immiscible solvent (B) comprises a perfluorohydrocarbon or a functionalized derivative thereof, preferably C3 to C30 perfluoroalkanes, -alkenes or - cycloalkanes, more preferred C4 to C10 perfluoro-alkanes, -alkenes or -cycloalkanes, particularly preferred perfluorohexane, perfluoroheptane, perfluorooctane or perfluoro (methylcyclohexane) or a mixture thereof.

Perfluorinated hydrocarbon denotes a hydrocarbon compound, where all hydrogen atoms are replaced with fluorine atom. Highly fluorinated hydrocarbon denotes a hydrocarbon compound, where at least half of the hydrogen atoms are replaced by fluorine atom.

Furthermore it is preferred that the emulsion comprising said continuous phase and said dispersed phase is a bi-or multiphasic system as known in the art.

A surfactant can be used for forming the emulsion. After the formation of the emulsion system, said catalyst is formed in situ from catalyst components in said solution.

In principle, the surfactant may be any suitable agent which contributes to the formation and/or stabilization of the emulsion and which does not have any adverse effect on the catalytic activity of the catalyst. The surfactant is based on hydrocarbons optionally interrupted with (a) heteroatom(s), preferably halogenated hydrocarbons optionally having a functional group, preferably semi-, highly- or perfluorinated hydrocarbons as known in the art.

Alternatively, the surfactant may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, (such as $C_4$ - $C_{20}$, or $C_5$ - $C_{10}$ alcohol, like heptanol, octanol or nonanol), which reacts e.g. with a cocatalyst component, such as aluminoxane. For instance in preferred embodiments 2,2,3,3,4,4,5,5,6,6,7,7,-dodecafluoroheptanol and 2,2,3,3,4,4,5,5,6,6,7,7,8,8,9,9,9-heptadecafluorononylnonanol are used as a surfactant precursor.

Suitable processes for dispersing the solution (A) within the solvent (B) is the use of mechanical as well as of ultrasound for mixing, as known to the skilled person. The process parameters, such as time of mixing, intensity of mixing, type of mixing, power employed for mixing, such as mixer velocity or wavelength of ultrasound employed, viscosity of solvent phase, are used for adjusting the size of the solid metallocene catalyst system (MCS).

In principle any solidification method can be used for forming the solid metallocene catalyst system (MCS) from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a rapid temperature change of more than 35 °C, preferably more than 40 °C. Depending on the apparatus type and size used, the temperature change can happen within less than 10 seconds, preferably less than 6 seconds.

For further details, embodiments and examples of the continuous and dispersed phase system, emulsion formation method, and solidification methods reference is made e.g. to the above cited international patent application WO 03/051934.

The process of the preparation of polyethylene is further defined by the obtained polyethylene. Accordingly with the new process a polyethylene is obtainable having

(a) a bulk density of at least 360 kg/m$^3$, more preferably of at least 375 kg/m$^3$, yet more preferably of at least 380 kg/m$^3$,
(b) a mean particle size of at least 0.7 mm, yet more preferably of at least 0.8 mm, like 0.9 mm, and still even higher than 1.0 mm, and
(c) a density below 940 kg/m$^3$.

Even more preferred the polyethylene as defined in the previous paragraph is further featured by a low ash content. Thus it is appreciated that the polyethylene, preferably obtained according to the process as defined herein, has an ash content below 250 ppm, more preferably below 220 ppm, yet more preferably below 200 ppm, or even below 170 ppm.

The polyethylene can be a polyethylene homopolymer or a polyethylene copolymer. In case the polyethylene is a polyethylene copolymer, the comonomer content, preferably the C4 to C10 α-olefin content, shall be preferably not more than 20 wt.-%, more preferably shall be not more than 15 wt.-%. The most preferred comonomers present in the polyethylene are 1-butene and/or 1-hexene.

The melt flow rate can vary in general in a broad range depending on the desired properties of the polyethylene produced. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and load. The melt flow rate is determined for polyethylene at 190 °C and may be determined at different loadings such as 2.16 kg ($MFR_2$), 5.00 kg ($MFR_5$) or 21.6 kg ($MFR_{21}$). Accordingly, the polyethylene of the invention, especially if polyethylene is bimodal in nature, has preferably an $MFR_2$ (190 °C) in the range of 0.2 to 30.0 g/10 min, more preferably in the range of 0.85 to 28.0 g/10min, yet more preferably in the range of 0.3 to 25.0 g/10 min. $MFR_2$ values for polyethylene in the field of the invention are also often in the range of 1 to 15 g/10 min. Density of the polyethylene of the invention is below 940 kg/m$^3$.

Thus a polyethylene having density below 940 kg/m$^3$ and $MFR_2$ (190 °C) in the range of 30.0 to 0.2 g/10 min can be produced by the method of the invention

Further the particle size distribution (PSD) of the polymer produced by the method of the invention is narrow.

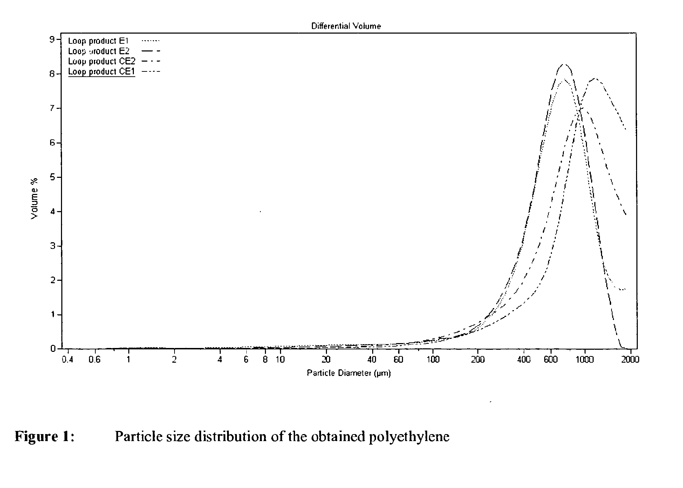

Figure 1 shows the differences of the particle size distribution (PSD) of polymers produced by the inventive method, where prepolymerisation temperature is above 75 °C compared to polymers, where lower prepolymerisation temperatures are used.

The invention will be now described in further detail by providing the following examples.

EXAMPLES

1. Definitions/Measuring Methods

The following definitions of terms and determination methods apply for the above general description of the invention as well as to the below examples unless otherwise defined. **$MFR_2$ (190 °C)** is measured according to ISO 1133 (190 °C, 2.16 kg load).

**Density** is measured according to ISO 1183-2. Sample preparation is done in accordance with ISO 1872-2B.

**Comonomer Content from PE (FTIR)**

Comonomer content was determined in a known manner based on Fourier transform infrared spectroscopy (FTIR) determination using Nicolet Magna 550 IR spectrometer together with Nicolet Omnic FTIR software.

Films having a thickness of about 220 to 250 μm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 cm$^{-1}$. The comonomer used in the calibration samples was the same as the comonomer present in the samples. The analysis was performed by using the resolution of 2 cm$^{-1}$, wave number span of from 4000 to 400 cm$^{-1}$ and the number of sweeps of 128. At least two spectra were run from each film.

The comonomer content was determined from the spectrum from the wave number range of from 1430 to 1100 cm$^{-1}$. The absorbance is measured as the height of the peak by selecting the so-called short or long base line or both. The short base line is drawn in about 1410 - 1320 cm$^{-1}$ through the minimum points and the long base line about between 1410 and 1220 cm$^{-1}$. Calibrations need to be done specifically for each base line type. Also, the comonomer content of the unknown sample needs to be within the range of the comonomer contents of the calibration samples.

From the calibration samples a straight line is obtained as follows:

$$C_i = k \cdot \frac{A_{1378,i}}{s_i} + b$$

where

$C_i$ is the comonomer content of the calibration sample i

$A_{1378,i}$ is the absorbance at appr. 1378 cm$^{-1}$ of sample i

$s_i$ is the thickness of the film made of calibration sample i

k is the slope of the calibration line (obtained by regression analysis), and

b is the intercept of the calibration line (obtained by regression analysis).

By using the thus obtained parameters k and b the comonomer content of the samples were obtained from

$$C_x = k \cdot \frac{A_{1378.x}}{s_x} + b$$

where

$C_x$ is the comonomer content of the unknown sample

$A_{1378,x}$ is the absorbance at appr. 1378 cm$^{-1}$ of the unknown sample

$s_x$ is the thickness of the film made of the unknown sample

k is the slope of the calibration line obtained from the calibration samples as above

b is the intercept of the calibration line obtained from the calibration samples.

The method gives the comonomer content in weight-% or in mol-%, depending on which was used in the calibration. If properly calibrated, the same approach may also be used to determine the number of methyl groups, i.e., $CH_3$ per 1000 carbon atoms.

**Porosity:** BET with $N_2$ gas, ASTM 4641, apparatus Micromeritics Tristar 3000; sample preparation at a temperature of 50 °C, 6 hours in vacuum.

**Surface area**: BET with $N_2$ gas ASTM D 3663, apparatus Micromeritics Tristar 3000: sample preparation at a temperature of 50 °C, 6 hours in vacuum.

**Mean particle size** is measured with Coulter Counter LS200 at room temperature with n-heptane as medium; particle sizes below 100 nm by transmission electron microscopy

**Median particle size** ($d_{50}$) is measured with Coulter Counter LS200 at room temperature with n-heptane as medium

**Bulk density BD** of the polymer powder was determined according to ASTM D1895-96,

**method A.**

**ICP analysis**

The elemental analysis of a catalyst was performed by taking a solid sample of mass, M, cooling over dry ice. Samples were diluted up to a known volume, V, by dissolving in nitric acid (HNO$_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % HNO$_3$, 3 % HF in DI water), a low standard (10 ppm Al in a solution of 5 % HNO$_3$, 3 % HF in DI water), a high standard (50 ppm Al, 50 ppm Hf, 20 ppm Zr in a solution of 5 % HNO$_3$, 3 % HF in DI water) and a quality control sample (20 ppm Al, 20 ppm Hf, 10 ppm Zr in a solution of 5 % HNO$_3$, 3 % HF in DI water).

The content of hafnium was monitored using the 282.022 nm and 339.980 nm lines and the content for zirconium using 339.198 nm line. The content of aluminium was monitored via the 167.081 nm line, when Al concentration in ICP sample was between 0-10 ppm and via the 396.152 nm line for Al concentrations between 10-100 ppm.

The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

wherein

C is the concentration in ppm, related to % content by a factor of 10,000

R is the reported value from the ICP-AES

V is the total volume of dilution in ml

M is the original mass of sample in g

If dilution was required then this also needs to be taken into account by multiplication of C by the dilution factor.

### 2. Preparation and Properties of Examples

**Preparation of catalyst**

Catalyst system is based on complex bis(n-butyl-cyclopentadienyl)hafnium dibenzyl (n-BuCp)$_2$HfBz$_2$

In a jacketed 90 dm$^3$ glass-lined stainless steel reactor the complex solution was prepared at - 5°C adding 1.26 kg of a 24.5 wt% PFPO ((2,2,3,3,4,4,5,5,6,6,7,7,8,8,9,9,9-heptadecafluorononyl)oxirane)/toluene solution very slowly (3.4 ml/min) to 20 kg 30 wt.-% methylaluminoxane/toluene solution. The temperature was increased to 25°C and the solution was stirred for 60 minutes. After addition of 253 g of complex (Hf-content 78.8 wt.-% in toluene) the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC (hexadecafluoro-1,3-dimethylcyclohexane) thus forming an emulsion. The droplets in the emulsion were solidified by an excess flow of 450 l/h PFC at a temperature of 60 °C in a Teflon hose. The hose was connected to a jacketed 160 dm$^3$ stainless steel reactor equipped with a helical mixing element. In this reactor the catalyst particles were separated from the PFC by density difference. After the complex solution had been utilised the catalyst particles were dried in the 160 dm$^3$ reactor at a temperature of 70 °C and a nitrogen flow of 5 kg/h for 4 h. The catalyst has Al content of 34.4 wt.-% and Hf content of 0.71 wt.-%. Porosity and surface area are below the detection limit. The mean particle size is 55 $\mu$m.

**Preparation of polyethylene**

Polyethylene was prepared using in addition to prepolymerization reactor a slurry-loop reactor as well as a gas phase reactor. The prepolymerization stage was carried out in slurry in a 50 dm$^3$ loop reactor under conditions and using feeds of catalyst (as prepared above), monomers, hydrogen, antistatic agent and diluent (propane (C3)) as disclosed in Tables 1 and 2. The obtained slurry together with prepolymerized catalyst was introduced into a 500 dm$^3$ loop reactor to carry out the actual polymerization. The polymer slurry was withdrawn from the loop reactor and transferred into a flash vessel operated at 3 bar pressure and 70 °C temperature where the hydrocarbons were substantially removed from the polymer. The polymer was then introduced into a gas phase reactor. The conditions and feeds/feed ratios in loop and gas phase polymerization steps are disclosed in Tables 3 to 6.

**Table 1**: Process conditions in the Prepolymerization (comparison examples)

|  |  | CE 1 | CE 2 |
|---|---|---|---|
| Temperature | [°C] | 60 | 70 |
| pressure | [bar] | 63 | 63 |
| catalyst feed | [g/h] | 5.2 | 17 |
| antistatic feed | [g/h] | 6.0 | 3.0 |
| C2 feed | [kg/h] | 2 | 2 |
| H2 feed | [g/h] | 0.6 | 1 |
| C4 feed | [g/h] | 30 | 30 |
| C3 feed | [kg/h] | 52 | 52 |

**Table 2**: Process conditions in the Prepolymerization (inventive examples)

|  |  | E1 | E2 |
|---|---|---|---|
| Temperature | [°C] | 80 | 80 |
| pressure | [bar] | 64 | 64 |
| catalyst feed | [g/h] | 16 | 18 |
| antistatic feed | [g/h] | 3.0 | 3.0 |

(continued)

|  |  | E1 | E2 |
|---|---|---|---|
| C2 feed | [kg/h] | 2.0 | 2.0 |
| H2 feed | [g/h] | 1.5 | 1.8 |
| C4 feed | [g/h] | 20.8 | 24.3 |
| C3 feed | [kg/h] | 52 | 52 |
| production rate | [kg/h] | 1.9 | 1.9 |

**Table 3**: Process conditions in the Loop reactor and properties (comparison examples)

|  |  | CE 1 | CE 2 |
|---|---|---|---|
| temperature | [°C] | 80 | 80 |
| pressure | [bar] | 58 | 60 |
| C2 feed | [kg/h] | 32 | 33 |
| H2 feed | [g/h] | 2.5 | 2.5 |
| C3 feed | [kg/h] | 97 | 97 |
| H2/C2 ratio | [mol/kmol] | 0.15 | 0.5 |
| C4/C2 ratio | [mol/kmol]l | 30 | 70 |
| production rate | [kg/h] | 28 | 30 |
| split | [wt-%] | 50 | 50 |
| MFR$_2$ | [g/10min] | 3.5 | 7.4 |
| Mean particle size | [mm] | 1.1 | 0.91 |
| density | [kg/m$^3$] | 938 | 930 |
| BD | [kg/m$^3$] | 250 | 328 |

**Table 4:** Process conditions in the Loop reactor and properties (inventive examples)

|  |  | E 1 | E 2 |
|---|---|---|---|
| temperature | [°C] | 80 | 80 |
| pressure | [bar] | 58 | 58 |
| C2 feed | [kg/h] | 32 | 33 |
| H2 feed | [g/h] | 7 | 6 |
| C4 feed | [kg/h] | 3 | 3 |
| C3 feed | [kg/h] | 111 | 112 |
| H2/C2 ratio | [molkmol] | 0.5 | 0.5 |
| C4/C2 ratio | [mol/kmol] | 104 | 121 |
| C4/C2 feed ratio | [g/kgl] | 79 | 78 |
| production rate | [kg/h] | 26.4 | 28.5 |
| split | [wt-%] | 46 | 46 |
| MFR$_2$ | [g/10min | 165 | 140 |
| Mean particle size | [mm] | 0.76 | 0.75 |

(continued)

|  |  | E 1 | E 2 |
|---|---|---|---|
| density | [kg/m$^3$] | 937 | 934 |
| BD | [kg/m$^3$] | 408 | 400 |

**Table 5**: Process conditions in the Gas phase reactor and properties (comparison examples)

|  |  | CE 2 | CE 3 |
|---|---|---|---|
| temperature | [°C] | 75 | 75 |
| pressure | [bar] | 20.0 | 20.0 |
| C2 feed | [kg/h] | 89 | 89 |
| H2/C2 ratio | [mol/kmo]l | 0.8 | 1.0 |
| C4/C2 ratio | [mol/kmol] | 15 | 14 |
| C6/C2 ratio | [mol/kmol] | - | 15 |
| production rate | [kg/h] | 29 | 30 |
| split | [wt-%] | 50 | 50 |
| MFR$_2$ | [g/10min] | 3.0 | 25 |
| mean particle size | [mm] | 1.1 | 1.3 |
| density | [kg/m$^3$] | 934 | 909 |
| BD | [kg/m$^3$] | 260 | 350 |
| Ash content | ppm | 190 | 160 |

**Table 6**: Process conditions in the Gas phase reactor and properties (inventive examples)

|  |  | **E 1** | **E 2** |
|---|---|---|---|
| temperature | [°C] | **75** | **75** |
| pressure | [bar] | 20 | 20 |
| C2 feed | [kg/h] | 66 | 59 |
| H2 feed | [g/h] | 7 | 4 |
| C4 feed | [kg/h] | 2 | 2 |
| C6 feed | [kg/h] | 7 | 7 |
| C2 conc. | [mol-%] | 41 | 37 |
| H2/C2 ratio | [mol/kmol] | 1 | 1 |
| C4/C2 ratio | [mol/kmol] | 15 | 16 |
| C6/C2 ratio | [mol/kmol] | 14 | 14 |
| C4/C2 feed ratio | [g/kg] | 36 | 39 |
| C6/C2 feed ratio | [g/kg] | 111 | 121 |
| production rate | [kg/h] | 30 | 31 |
| split | [wt-%] | 50 | 50 |
| MFR$_2$ | [g/10min] | 24.3 | 8.6 |
| mean particle size | [mm] | 1.23 | 1.14 |

(continued)

|  |  | E 1 | E 2 |
|---|---|---|---|
| density | [kg/m$^3$] | 912 | 911 |
| BD | [kg/m$^3$] | 390 | 398 |
| Ash content | ppm | 160 | 200 |
| For all tables:<br>H2: hydrogen<br>C2: ethylene<br>C3: propane<br>C4: butene<br>C6: hexene | | | |

It can be seen that polyethylene produced in a multistage process comprising prepolymerisation step run at a temperature of at least 75 °, and a loop and gas phase polymerization steps, has a density below 940 kg/m$^3$, bulk density above 370 kg/m$^3$, and still has a big mean particle size of at least 1 mm. However, if the prepolymerisation step is carried out at lower temperature (60 or 70 °C), it can be seen that even if the mean particle size is reasonable high, the bulk density is low.

**Claims**

1. Process for the preparation of a polyethylene comprising the steps of

   (a) prepolymerizing a solid metallocene catalyst system (MCS) in the presence of ethylene and/or (a) C3 to C10 $\alpha$-olefin(s) at a temperature above 75 °C, and
   (b) subsequently polymerizing in the presence of the prepolymerized solid metallocene catalyst system (pre-MCS) ethylene and optionally C3 to C10 $\alpha$-olefin(s) obtaining a polyethylene,
   wherein the solid metallocene catalyst system (MCS) used in step (a)

   (i) has surface area measured according to ASTM D 3663 of less than 25.0 m$^2$/g and/or a porosity measured according to ASTM 4641 of less than 1.40 ml/g,
   and
   (ii) comprises

   ($\alpha$) an organo-transition metal compound of formula (I)

   $$L_2R_nMX_2 \qquad (I)$$

   wherein
   M is a transition metal of groups 4 to 10 of the periodic table (IUPAC) L is an organic $\eta^5$-ligand,
   R is a bridging group linking the organic ligands (L),
   X is a ligand with a $\sigma$-bond to the transition metal (M) n is 0, 1 or 2,
   and
   ($\beta$) a cocatalyst (Co) comprising an element of group 13 of the periodic table (IUPAC).

2. Process according to claim 1, wherein the prepolymerization (step (a)) is conducted in a loop prepolymerizing reactor and the polymerization (step (b)) is conducted in a reactor system comprising at least one slurry rector and optionally at least one gas phase rector.

3. Process according to claim 1 or 2, wherein the hydrogen/ethylene feed ratio ($H_2/C_2$) during the prepolymerization (step (a)) is at least 0.3 g $H_2$/kg $C_2$.

4. Process according to anyone of the preceding claims, wherein in the prepolymerization step (step (a)) an antifouling composition is used, preferably in an amount of at least 10 ppm based on the amount of reaction medium used.

5. Process according claim 4, wherein the antifouling composition comprises an organic compound which has at least 14 carbon atoms and comprises at least one polar functional group.

6. Process according to anyone of the preceding claims, wherein the feed ratio of C4 to C8 $\alpha$-olefin to ethylene during the prepolymerisation (step (a)) is in the range of 5 to 40 g C4-C8 $\alpha$-olefin/kg ethylene.

7. Process according to anyone of the preceding claims, wherein the reaction pressure in the prepolymerization step (step (a)) is from $4,5.10^6$ to $1.10^7$ Pa (45 to 100 bar).

8. Process according to anyone of the preceding claims, wherein the polyethylene has

    (a) a density below 940 g/m$^3$,
    and/or
    (b) a mean particle size of at least 0.7 mm.

9. Process according to anyone of the preceding claims, wherein the polyethylene has

    (a) MFR$_2$ (190 "C) in the range of 0.3 to 30 g/10 min,
    and/or
    (b) a bulk density of at least 360 kg/m$^3$.

10. Process according to anyone of the preceding claims, wherein the temperature in the polymerization step (step (b)) is in the range of 40 to 130 °C.

11. Process according to anyone of the preceding claims, wherein the transition metal compound of formula (I) and a cocatalyst (Co) constitute at least 90 wt.-% of the metallocene catalyst system (MCS) and additionally organic or inorganic material at most 10 wt.-% of the metallocene catalyst system.

12. Process according to anyone of the preceding claims, wherein solid metallocene catalyst system (MCS) has a mean particle size of not more than 200 $\mu$m.

13. Process according to anyone of the preceding claims, wherein the transition metal compound has a formula (II)

$$(Cp)_2R_nMX_2 \qquad (II)$$

wherein
"M" is zirconium (Zr), hafnium (Hf), or titanium (Ti), preferably zirconium (Zr) or hafnium (Hf),
each "X" is independently a monovalent anionic $\sigma$-ligand,
each "Cp" is independently an unsaturated organic cyclic ligand which coordinates to the transition metal (M),
"R" is a bridging group linking two organic ligands (L) and has the formula (III)

$$-Y(R')_2- \qquad (III)$$

wherein
Y is carbon (C), silicon (Si) or germanium (Ge), and
R' is C$_1$ to C$_{20}$ alkyl, C$_6$ to C$_{12}$ aryl, C$_7$ to C$_{12}$ arylalkyl, or trimethylsilyl,
"n" is 0 or 1,
and
at least one "Cp"-ligand, preferably both "Cp"-ligands, is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

14. Process according to anyone of the preceding claims, wherein the cocatalyst (Co) is a trialkylaluminium and/or aluminoxane compound.

15. Process according to anyone of the preceding claims, wherein the solid metallocene catalyst system (MCS) is free of silica carrier material and/or MgCl$_2$ and/or porous polymeric material.

**Patentansprüche**

1. Verfahren zur Herstellung von einem Polyethylen, umfassend die Schritte von

   (a) Prepolymerisieren eines festen Metallocen-Katalysator-Systems (MCS) in Gegenwart von Ethylen und/oder
   (a) C3 bis C10 $\alpha$-Olefin(en) bei einer Temperatur oberhalb 75°C, und
   (b) anschließend Polymerisieren in Gegenwart von dem prepolymerisierten festen Metallocen-Katalysator-System (Pre-MCS) von Ethylen und gegebenenfalls C3 bis C10 $\alpha$-Olefin(en) unter Gewinnen eines Polyethylens,

   wobei das feste in Schritt (a) verwendete Metallocen-Katalysator-System (MCS)

   (i) eine Oberfläche, gemessen gemäß ASTM D 3663, von weniger als 25,0 $m^2$/g und/oder eine Porosität, gemessen gemäß ASTM 4641, von weniger als 1,40 ml/g aufweist,
   und
   (ii) umfasst

      ($\alpha$) eine Organo-Übergangs-Metall-Verbindung der Formel (I)

      $$L_2R_nMX_2 \qquad (I)$$

      worin
      M ein Übergangs-Metall der Gruppen 4 bis 10 des Periodensystems (IUPAC) darstellt,
      L einen organischen $\eta^5$-Liganden darstellt, R eine Brücken-Gruppe, die die organischen Liganden (L) verbindet, darstellt,
      X einen Liganden mit einer $\sigma$-Bindung zu dem Übergangs-Metall (M) darstellt,
      n 0, 1 oder 2 ist,
      und
      (ß) einen Cokatalysator (Co), umfassend ein Element der Gruppe 13 des Periodensystems (IUPAC) .

2. Verfahren nach Anspruch 1, wobei die Prepolymerisation (Schritt (a)) in einem Schleifen-Prepolymerisations-Reaktor durchgeführt wird und die Polymerisation (Schritt (b)) in einem Reaktor-System, umfassend mindestens einen Suspensions-Reaktor und gegebenenfalls mindestens einen Gas-Phasen-Reaktor, durchgeführt wird.

3. Verfahren nach Anspruch 1 oder 2, wobei das Wasserstoff / Ethylen-Beschickungs-Verhältnis ($H_2$ / $C_2$) während der Prepolymerisation (Schritt (a)) mindestens 0,3 g $H_2$/kg $C_2$ ist.

4. Verfahren nach einem der vorangehenden Ansprüche, wobei in dem Prepolymerisations-Schritt (Schritt (a)) eine Anti-Fouling-Zusammensetzung, vorzugsweise in einer Menge von mindestens 10 ppm, bezogen auf die Menge an verwendetem Reaktions-Medium, verwendet wird.

5. Verfahren nach Anspruch 4, wobei die Anti-Fouling-Zusammensetzung eine organische Verbindung umfasst, die mindestens 14 Kohlenstoff-Atome aufweist und mindestens eine polare funktionelle Gruppe umfasst.

6. Verfahren nach einem der vorangehenden Ansprüche, wobei das Beschickungs-Verhältnis von C4 bis C8 $\alpha$-Olefin zu Ethylen während der Prepolymerisation (Schritt (a)) in dem Bereich von 5 bis 40 g C4-C8 $\alpha$-Olefin / kg Ethylen ist.

7. Verfahren nach einem der vorangehenden Ansprüche, wobei der Reaktions-Druck in dem Prepolymerisations-Schritt (Schritt (a)) von 4,5 x $10^6$ bis 1 x $10^7$ Pa (45 bis 100 bar) ist.

8. Verfahren nach einem der vorangehenden Ansprüche, wobei das Polyethylen

   (a) eine Dichte unter 940 g/$m^3$,
   und/oder
   (b) eine mittlere Teilchengröße von mindestens 0,7 mm aufweist.

9. Verfahren nach einem der vorangehenden Ansprüche, wobei das Polyethylen

   (a) $MFR_2$ (190°C) in dem Bereich von 0,3 bis 30 g/10 min und/oder

(b) eine Schütt-Dichte von mindestens 360 kg/m$^3$ aufweist.

10. Verfahren nach einem der vorangehenden Ansprüche, wobei die Temperatur in dem Polymerisations-Schritt (Schritt (b)) in dem Bereich von 40 bis 130°C liegt.

11. Verfahren nach einem der vorangehenden Ansprüche, wobei die Übergangs-Metall-Verbindung der Formel (I) und ein Cokatalysator (Co) mindestens 90 Gew.-% des Metallocen-Katalysator-Systems (MCS) und zusätzlich organisches oder anorganisches Material maximal 10 Gew.-% des Metallocen-Katalysator-Systems ausmachen.

12. Verfahren nach einem der vorangehenden Ansprüche, wobei das feste Metallocen-Katalysator-System (MCS) eine mittlere Teilchengröße von nicht mehr als 200 μm aufweist.

13. Verfahren nach einem der vorangehenden Ansprüche, wobei die Übergangs-Metall-Verbindung eine Formel (II) aufweist

$$(Cp)_2R_nMX_2 \qquad (II)$$

worin

"M" Zirkonium (Zr), Hafnium (Hf) oder Titan (Ti), vorzugsweise Zirkonium (Zr) oder Hafnium (Hf), darstellt,
jedes "X" unabhängig einen einwertigen anionischen σ-Liganden darstellt,
jedes "Cp" unabhängig einen ungesättigten organischen cyclischen Liganden, der an das Übergangs-Metall (M) koordiniert, darstellt,
"R" eine Brücken-Gruppe, die an zwei organische Liganden (L) bindet, darstellt und die Formel (III) aufweist

$$-Y(R')_2- \qquad (III)$$

worin

Y Kohlenstoff (C), Silicium (Si) oder Germanium (Ge) darstellt, und
R' $C_1$ bis $C_{20}$ Alkyl, $C_6$ bis $C_{12}$ Aryl, $C_7$ bis $C_{12}$ Arylalkyl oder Trimethylsilyl darstellt,
"n" 0 oder 1 ist,
und
mindestens ein "Cp"-Ligand, vorzugsweise beide "Cp"-Liganden, aus der Gruppe, bestehend aus unsubstituiertem Cyclopentadienyl, unsubstituiertem Indenyl, unsubstituiertem Tetrahydroindenyl, unsubstituiertem Fluorenyl, substituiertem Cyclopentadienyl, substituiertem Indenyl, substituiertem Tetrahydroindenyl und substituiertem Fluorenyl, ausgewählt ist (sind).

14. Verfahren nach einem der vorangehenden Ansprüche, wobei der Cokatalysator (Co) eine Trialkylaluminium- und/oder Aluminoxan-Verbindung darstellt.

15. Verfahren nach einem der vorangehenden Ansprüche, wobei das feste Metallocen-Katalysator-System (MCS) frei von Siliciumdioxid-Träger-Material und/oder MgCl$_2$ und/oder porösem polymerem Material ist.

## Revendications

1. Procédé de préparation d'un polyéthylène comprenant les étapes consistant à

(a) prépolymériser un système catalyseur métallocène solide (SCM) en présence d'éthylène et/ou d'α-oléfine (s) en $C_3$ à $C_{10}$ à une température supérieure à 75°C, et
(b) polymériser ensuite, en présence du système catalyseur métallocène solide prépolymérisé (pré-SCM), l'éthylène et facultativement la ou les α-oléfines en $C_3$ à $C_{10}$, obtenant un polyéthylène,

dans lequel le système catalyseur métallocène solide (SCM) utilisé à l'étape (a)

(i) a une surface spécifique mesurée selon la norme ASTM D 3663 inférieure à 25,0 m$^2$/g et/ou une porosité mesurée selon la norme ASTM 4641 inférieure à 1,40 ml/g,

et

(ii) comprend

(α) un composé organo-métal de transition de formule (I)

$$L_2R_nMX_2 \qquad (I)$$

dans laquelle
M est un métal de transition des groupes 4 à 10 du tableau périodique (IUPAC),
L est un ligand $\eta^5$ organique,
R est un groupe de pontage liant les ligands organiques (L),
X est un ligand avec une liaison σ au métal de transition (M),
n vaut 0, 1 ou 2,
et
(β) un cocatalyseur (Co) comprenant un élément du groupe 13 du tableau périodique (IUPAC).

2. Procédé selon la revendication 1, dans lequel la prépolymérisation (étape (a)) est réalisée dans un réacteur de prépolymérisation en boucle et la polymérisation (étape (b)) est réalisée dans un système de réacteur comprenant au moins un réacteur à phase humide et facultativement au moins un réacteur à phase gazeuse.

3. Procédé selon la revendication 1 ou 2, dans lequel le rapport d'alimentation hydrogène/éthylène ($H_2/C_2$) pendant la prépolymérisation (étape (a)) est d'au moins 0,3 g d'$H_2$/kg de $C_2$.

4. Procédé selon l'une quelconque des revendications précédentes, dans lequel à l'étape de prépolymérisation (étape (a)) une composition d'antifouling est utilisée, de préférence en une quantité d'au moins 10 ppm sur la base de la quantité de milieu de réaction utilisé.

5. Procédé selon la revendication 4, dans lequel la composition d'antifouling comprend un composé organique qui a au moins 14 atomes de carbone et comprend au moins un groupe fonctionnel polaire.

6. Procédé selon l'une quelconque des revendications précédentes, dans lequel le rapport d'alimentation entre l'α-oléfine en $C_4$ à $C_8$ et l'éthylène pendant la prépolymérisation (étape (a)) se situe dans la plage de 5 à 40 g d'α-oléfine en $C_4$ à $C_8$/kg d'éthylène.

7. Procédé selon l'une quelconque des revendications précédentes, dans lequel la pression de réaction à l'étape de prépolymérisation (étape (a)) est de $4,5.10^6$ à $1.10^7$ Pa (45 à 100 bar).

8. Procédé selon l'une quelconque des revendications précédentes, dans lequel le polyéthylène a

(a) une densité inférieure à 940 g/m$^3$,
et/ou
(b) une taille moyenne de particules d'au moins 0,7 mm.

9. Procédé selon l'une quelconque des revendications précédentes, dans lequel le polyéthylène a

(a) un MFR$_2$ (190°C) dans la plage de 0,3 à 30 g/10 min,
et/ou
(b) une densité apparente d'au moins 360 kg/m$^3$.

10. Procédé selon l'une quelconque des revendications précédentes, dans lequel la température à l'étape de polymérisation (étape (b)) se situe dans la plage de 40 à 130°C.

11. Procédé selon l'une quelconque des revendications précédentes, dans lequel le composé de métal de transition de formule (I) et un cocatalyseur (Co) constituent au moins 90 % en poids du système catalyseur métallocène (SCM) et en outre un matériau organique ou inorganique d'au plus 10 % en poids du système catalyseur métallocène.

12. Procédé selon l'une quelconque des revendications précédentes, dans lequel le système catalyseur métallocène solide (SCM) a une taille moyenne de particules qui ne dépasse pas 200 μm.

**13.** Procédé selon l'une quelconque des revendications précédentes, dans lequel le composé de métal de transition a une formule (II)

$$(Cp)_2R_nMX_2 \qquad (II)$$

dans laquelle

« M » est le zirconium (Zr), l'hafnium (Hf) ou le titane (Ti), de préférence le zirconium (Zr) ou l'hafnium (Hf), chaque « X » est indépendamment un ligand σ anionique monovalent, chaque « Cp » est indépendamment un ligand cyclique organique insaturé qui se coordonne au métal de transition (M),

« R » est un groupe de pontage liant deux ligands organiques (L) et a la formule (III)

$$-Y(R')_2- \qquad (III)$$

dans laquelle

Y est le carbone (C), le silicium (Si) ou le germanium (Ge), et

R' est un groupe alkyle en $C_1$ à $C_{20}$, aryle en $C_6$ à $C_{12}$, arylalkyle en $C_7$ à $C_{12}$ ou triméthylsilyle,

« n » vaut 0 ou 1,

et

au moins un ligand « Cp », de préférence les deux ligands « Cp », est (sont) sélectionné(s) dans le groupe constitué par un groupe cyclopentadiényle non substitué, indényle non substitué, tétrahydro-indényle non substitué, fluorényle non substitué, cyclopentadiényle substitué, indényle substitué, tétrahydroindényle substitué et fluorényle substitué.

**14.** Procédé selon l'une quelconque des revendications précédentes, dans lequel le cocatalyseur (Co) est un composé de trialkylaluminium et/ou d'aluminoxane.

**15.** Procédé selon l'une quelconque des revendications précédentes, dans lequel le système catalyseur métallocène solide (SCM) est exempt de matériau porteur de silice et/ou de $MgCl_2$ et/ou de matériau polymère poreux.

**Figure 1:**     Particle size distribution of the obtained polyethylene

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03051934 A
- EP 0327649 A1
- EP 1693388 A1
- EP 0887379 A
- EP 517868 A
- US 5391654 A
- WO 9428034 A